# EUROPÄISCHE PATENTSCHRIFT

(11) **EP 1 316 585 B1**
(45) Veröffentlichungstag und Bekanntmachung des Hinweises auf die Patenterteilung: **02.05.2007**
(21) Anmeldenummer: 02026359.6
(22) Anmeldetag: 25.11.2002
(51) Int. Cl.: C08L 67/02, C08K 3/04, C08G 63/85, C08G 63/87

(54) **Thermostabiler, antimonfreier Polyester, Verfahren zu seiner Herstellung und seine Verwendung**
Thermostable, antimony-free polyester, process for its preparation and its use
Polyester thermostable, exempte d'antimoine, procédé pour sa préparation et son utilisation

(30) Priorität: 30.11.2001 DE 10159049
(43) Veröffentlichungstag der Anmeldung: 04.06.2003
(73) Patentinhaber: INVISTA Technologies S.à.r.l., 8001 Zürich (CH)
(72) Erfinder: Bayer, Uwe, Dr., 86459 Gessertshausen (DE); Popp, Jürgen, Dr., 65527 Niedernhausen (DE); Wehrmeister, Thomas, Dr., 65428 Rüsselsheim (DE)
(74) Vertreter: Zounek, Nikolai

(56) Entgegenhaltungen:
- WO-A-99/10573
- GB-A- 1 027 266
- US-A- 3 905 938

## Beschreibung

Die Erfindung betrifft einen thermostabilen, antimonfreien Polyester auf Basis aromatischer Dicarbonsäuren und aliphatischer Diole, wobei ein Teil der aromatischen Dicarbonsäuren durch aliphatische Dicarbonsäuren ersetzt sein kann und der Polyester Titan enthält, ein Verfahren zu seiner Herstellung und seine Verwendung

Polyester haben auf sehr vielen Anwendungsgebieten eine sehr große Bedeutung gewonnen. Insbesondere werden gesättigten Polyester für die Herstellung von Fasermaterialien, aber auch von Formkörpern, wie z. B. von Getränkeflaschen, in großem Umfang eingesetzt. Für eine einwandfreie Verarbeitbarkeit dieser Polyester durch Extrusionsverfahren und für die weitere Anwendung der Extrudate z. B. in der Textilindustrie oder der Getränkeindustrie, werden sehr hohe Anforderungen an die Qualität der Polyester gestellt. Insbesondere wird gefordert, dass die verarbeitungstechnischen und anwendungstechnischen Eigenschaften von Polyestertypen für bestimmte Verarbeitungen innerhalb sehr enger Grenzen stets gleich sind. Für die Herstellung von Mikrofilamenten mit einem Titer kleiner 1 dtex darf der Polyester keine großen Additive enthalten, da diese Additive Filamentbrüche beim Verspinnen verursachen.

Die Herstellung von Polyestern erfolgt üblicher Weise durch Veresterung aromatischer Dicarbonsäuren oder Umesterung niederer aliphatischer Ester aromatischer Dicarbonsäuren mit aliphatischen Diolen und anschließende Polykondensation bis das für den geplanten Einsatz erforderliche Molekulargewicht erreicht ist.

Eine Umesterung erfolgt in Gegenwart von Umesterungskatalysatoren, die nach Abschluss der Umesterung durch Zusatz von Komplexbildnern desaktiviert werden müssen. Als Komplexbildner werden phosphorhaltige Verbindungen wie Phosphorsäure, phosphorige Säure und/oder Phosphonsäuren oder Derivate derselben eingesetzt. Nach der Veresterung oder der Umesterung erfolgt die Polykondensation in Gegenwart eines Polykondensationskatalysators, wobei sich in der Großtechnik Antimonverbindungen, nämlich Antimontrioxid, durchgesetzt haben. Es ist bekannt, Titanverbindungen an Stelle von Antimonverbindungen als Polykondensationskatalysatoren zur PET-Herstellung einzusetzen.

So ist aus der EP-A 0 699 700 ein thermostabiler farbneutraler antimonfreier Polyester bekannt, der eine Titanverbindung als Polykondensationskatalysator, ein Umesterungskatalysatormetall in Form katalytisch unwirksamer Komplexe mit einer phosphorhaltigen Verbindung oder einem Derivat derselben, des Weiteren Kobalt, das teilweise in Form katalytisch unwirksamer Komplexe mit der phosphorhaltigen Verbindung vorliegt und gegebenenfalls einen optischen Aufheller enthält.

Aus der US-A 4 476 272 ist ein Polyester großer Klarheit und geringer Trübung bekannt, der einen sehr geringen Anteil an Infrarot absorbierendem Material wie beispielsweise Ruß enthält. Dieser Polyester wird zur Herstellung von Vorformlingen für Schalen und Flaschen eingesetzt, der hierfür verwendete Ruß hat durchschnittliche Partikelgrößen im Bereich von 10 bis 500 nm, wobei jedoch der Anteil des Russes geringer als 10 ppm, bezogen auf das Gewicht des Polyesters, ist. Wegen dieses geringen Anteils an Rußpartikeln ist die Gefahr einer Agglomeration dieser Rußpartikel zu größeren Teilchen sehr gering.

Wird beispielsweise ein Polyester mit einem Rußgehalt von 20 Gew.-%, bezogen auf das Gesamtgewicht des Polyesters, hergestellt, dann zeigt sich, dass bei einem derart hohen Rußgehalt von 200000 ppm die feinen Rußpartikel mit Korngrößen von 50 bis 500 nm in der zugemischten Rußdispersion zu größeren Rußpartikeln mit einem Durchmesser im Bereich von mehr als 10 µm agglomerieren. Überraschend wurde gefunden, dass der Durchmesser dieser Rußpartikel dabei von dem gewählten Polykondensationskatalysator abhängt, wobei sich herausstellt, dass der üblicherweise verwendete Antimontrioxidkatalysator Sb₂O₃ relativ große agglomerierte Rußpartikel nach der Polykondensation ergibt, welche die Gefahr von Fi lamentbrüchen bei den aus dem Polyester ersponnenen Filamenten erhöhen.

Werden aus einem Polyester Mikrofilamente mit einem Titer kleiner 1dtex versponnen, so darf der Polyester nur sehr kleine Rußpartikel enthalten, damit es beim Verspinnen nicht zu Filamentbrüchen kommt.

Aus der JP-A-48 093 648 ist es bekannt, die Verteilungen von Ruß in einem Antimon haltigen Polyester durch Hinzufügen von Ca-, Mg-, Sr oder Ba-Salz(en) der Fettsäure zu verbessern. Der Polyester enthält Sb₂O₃, Calciumacetat-Monohydrat Ca(oAc)₂·H₂O, Ruß und als Dispergierhilfsmittel Natriumlignosulfonat.

In der JP-A6 330 8033 ist ein Antimon haltiger Polyester beschrieben, der einen in Ethylenglykol dispergierten Ruß mit einer mittleren Partikelgröße von 0,01 bis 1,0 µm enthält, wobei als Dispergierhilfsmittel Vinylpymolidon-vinylacetatzugesetzt ist. Der als Folie extrudierte Polyester hat eine glattere Oberfläche im Vergleich zu einem Polyester ohne Dispergierhilfsmittel.

Zur Färbung von Polyester sind Farbdispersionen aus der JP-B-49011737 bekannt, die aus Ruß und Poly(vinylpyrrolidon) als Dispergierhilfsmittel, jeweils dispergiert in Ethylenglykol, bestehen.

Die JP-A-50 015 833 beschreibt eine Dispersion aus Ruß und Kupferphthalocyanin in Ethylenglykol, die einem Antimon haltigen Polyester zugesetzt wird.

Im Stand der Technik wird als Polykondensationskatalysator bevorzugt eine Antimonverbindung wie Sb₂O₃ zusammen mit einer Rußdispersion eingesetzt. Ein gängiges Mittel um die Agglomeration von Rußpartikeln klein zu halten bzw. nach Möglichkeit zu verhindern besteht darin, Dispergierhilfsmittel einzusetzen.

Aufgabe der vorliegenden Erfindung ist es daher, einen Polyester mit einem hohen Rußgehalt bereit zu stellen, der deutlich kleiner agglomerierte Rußpartikel als im Stand der Technik enthält.

Diese Aufgabe wird durch einen erfindungsgemäßen Polyester in der Weise gelöst, dass er 1 bis 100 ppm Titan, bezogen auf die Menge an Polyester, 0,01 bis 20 Gew.-% Ruß, bezogen auf das Gewicht des Polyesters und 0 bis 200 ppm einer phosphorigen Verbindung, bezogen auf die Menge an Polyester, enthält.

In Ausgestaltung der Erfindung enthält der Polyester 0,01 bis 5 Gew.-% Ruß, bevorzugt 0,1 bis 2 Gew.-% Ruß und insbesondere 0,4 bis 1,6 Gew.-% Ruß, jeweils bezogen auf das Gewicht des Polyesters.

Der Polykondensationskatalysator ist bevorzugt aus der Gruppe löslicher oder dispergierbarer Titanverbindungen auswählbar. So besteht der Polykondensationskatalysator aus einer in Ethylenglykol löslichen Titanverbindung. Eine derartige Titanverbindung ist zweckmäßiger Weise Titanalkoxid Ti(OR)₄ oder Titankaliumoxalat K₂TiO(ox)₂.

In einer weiteren Ausführungsform der Erfindung besteht der Polykondensationskatalysator aus einem in Ethylenglykol dispergierbarem Gemisch aus Titandioxid und Siliciumdioxid oder Metalloxid-Titandioxid-Hydrat. Bei dem Metall handelt es sich beispielsweise um ein Alkali- oder Erdalkalimetall. Bei dem ersten Polykondensationskatalysator handelt es sich um ein Copräzipitat aus TiO₂ : SiO₂, mit einem Titangehalt von > 1 Gew.-% Titan, bezogen auf das Gewicht des Polykondensationskatalysators. Im Polymer beträgt der Anteil an metallischem Titan 5 bis 50 ppm, bezogen auf die Menge des Polyesters.

In Ausgestaltung der Erfindung ist der Ruß in Form einer Rußdispersion nach der Umesterung bzw. nach der Veresterung zugegeben und erfolgt die Rußdispergierung in einem niederen aliphatischen Diol unter Zumischung eines Dispergierhilfsmittels. Zweckmäßiger Weise besteht die Rußdispersion aus einem primären Rußkorn mit einer mittleren Primärpartikelgröße von kleiner 100 nm, insbesondere von 13 bis 50 nm, einem Dispergierhilfsmittel und Ethylenglykol.

Das Dispergierhilfsmittel ist in vorteilhafter Weise ionisch und ist aus der Gruppe Polyacrylat, modifiziertes Polyacrylat, Naphthalinsulfonsäure-Formaldehyd-Harz, Poly(vinylpyrrolidon-co-3-methyl-1-vinylimidazolium-methylsulfat) ausgewählt.

Erfindungsgemäß ist in weiterer Ausgestaltung das Dispergierhilfsmittel nicht ionisch und ist aus der Gruppe Polyvinylpyrrolidon, Poly(vinylpyrrolidon-co-vinylacetat), Polyvinylcaprolactam, Poly(vinylpyrrolidon-co-vinylcaprolactam), ethoxylierter Novolak, Tristyrylphenol-Ethoxylat, Tri-sec-butylphenol-Ethoxylat ausgewählt.

Die weitere Ausgestaltung des erfindungsgemäßen Polyesters ergibt sich aus den Merkmalen der Patentansprüche 15 bis 22.

Das Verfahren zur Herstellung eines Polyesters auf der Basis aromatischer Dicarbonsäuren und aliphatischer Diole, wobei ein Teil der aromatischen Dicarbonsäuren durch aliphatische Dicarbonsäuren ersetzt sein kann, zeichnet sich dadurch aus, dass nach erfolgter Umesterungsreaktion von Dimethylterephthalatund Ethlyenglykol bzw. Veresterung gereinigter Terephthalsäure, die in einem niederen aliphatischen Glykol dispergiert istund Polykondensation dieser Komponenten mit Hilfe einer Titanverbindung als Polykondensationskatalysator, eine Rußdispersion zugemischt wird, die in einem niederen aliphatischen Diol zusammen mit einem Dispergierhilfsmittel dispergiert istund dass phosphorhaltige Verbindungen als Additive mit den übrigen Komponenten der Reaktion vermischt werden.

Die weitere Ausführung des erfindungsgemäßen Verfahrens ergibt sich aus den Merkmalen der Patentansprüche 24 bis 26.

Der erfindungsgemäße Polyester findet Verwendung für textile Filamente, technische Filamente, für Sicherheitsgurte, Netze, Stapelfasern, BCF-Fasern, Monofilamente, Faser-Vlies-Strukturen, für farbintensive Einfärbung von Folien, Abtönen von Folien, für Folien mit UV-Schutz sowie für die Herstellung von Masterbatches und für spritzgegossene geformte Gegenstände.

Bei der Erfindung wurde überraschend gefunden, dass neben den Dispergierhilfsmitteln auch das Polykondensationskatalysatorsystem einen Einfluss auf die Ausbildung der Rußagglomerate hat. Durch die Verwendung von Titan als Polykondensationskatalysator werden deutlich kleinere Rußpartikel gebildet als bei der Verwendung von Antimon als Polykondensationskatalysator.

Mit der Erfindung wird der Vorteil erzielt, dass einerseits der Rußgehalt im Polyester hoch ist, wodurch beispielsweise ein tief schwarz gefärbtes Filamentgarn oder schwarz gefärbte Folie hergestellt werden kann und andererseits wegen der kleineren Partikeldurchmesser der Rußagglomerate vor allem die Gefahr von Filamentbrüchen beim Verspinnen des Polyesters zu Fäden stark verringert wird.

Die Erfindung wird im Folgenden näher erläutert.

Es zeigen:
- Figur 1: die Verteilung der Anzahl der Rußpartikel in Abhängigkeit von dem Partikeldurchmesser, unter Einsatz einer Antimonverbindung als Polykondensationskatalysator und eines Natriumsalzes des Naphthalinsulfonsäure-Formaldehyd-Polykondensats als Dispergierhilfsmittel für eine Rußdispersion ,
- Figur2: die Verteilung der Anzahl der Rußpartikel in Abhängigkeit von dem Partikeldurchmesser, unter Einsatz einer Titanverbindung als Polykondensationskatalysator und eines Natriumsalzes des Naphthalinsulfonsäure-Formaldehyd-Polykondensats als Dispergierhilfsmittel für eine Rußdispersion, und
- Figur 3: einen Vergleich der Verteilungen der Anzahl der Rußpartikel in Abhängigkeit von dem Partikeldurchmesser, unter Einsatz einer Antimonverbindung und einer Titanverbindung als Polykondensationskatalysator und jeweils Natriumsalz des Naphthalinsulfonsäure-Formaldehyd-Polykondensats als Dispergierhilfsmittel für eine Rußdispersion.

### PET-Herstellung

Der Polyester mit bis zu 20 Gew.-% Ruß kann entweder von der DMT (Dimethyltherephthalsäure) Fahrweise ausgehend oder von der Terephthalsäure Fahrweise ausgehend hergestellt werden. Die Herstellung ist dem Fachmann bekannt, sie wird mit den gebräuchlichen Umesterungskatalysatoren, und mit den Polykondensationskatalysatoren auf Titanbasis unter bekannten Prozeßbedingungen nach der hier beschriebenen Erfindung durchgeführt. Des Weiteren kann der hier beschriebene Polyester durch die bekannte Schmelzekondensation, Feststoffkondensation oder ähnliche Verfahren hergestellt sein.

### DMT-Fahrweise

Der erfindungsgemäße Polyester kann beispielsweise in einem geschlossenen inertisierten Reaktionsgefäß hergestellt werden. Dazu werden für die Umesterungsreaktion die Komponenten Dimethylterephthalat (DMT) und Ethylenglykol einzeln in das Reaktionsgefäß überführt und unter Rühren gemischt. Das Verhältnis von DMT zu Ethylenglykol beträgt von 1:1.5 bis 1:3.5 bevorzugt 1:2 bis 1:3.

Danach wird der Umesterungskatalysator zugesetzt. Geeignete Katalysatoren für die Umesterung sind Verbindungen der Gruppen Ia (z.B.: Li, Na, K), IIa (z.B.: Mg, Ca), IIb (z.B.: Zn) IVb (z.B.: Ge) und VIIa (z.B.: Mn) des Periodensystems, insbesondere solche die eine gewisse Löslichkeit in dem Umesterungsansatz haben, so wie deren Salze von organischen Säuren. Bevorzugt sind die Salze der folgenden Metalle Mn, Zn, Ca oder Mg insbesondere des Mangans mit niederen aliphatischen Carbonsäuren, insbesondere der Essigsäure.

Die Umesterungsreaktion erfolgt beispielsweise bei Normaldruck in einem Temperaturbereich von etwa 100 °C bis 200 °C. Das Umesterungsprodukt wird anschließend mit einerRußdispersion in einem niederen aliphatischen Diol gemischt. Die Ruß-Konzentration der Rußdispersion beträgt zwischen 0,1 bis 20 Gew-%, bevorzugt zwischen 5 und 15 %.

Es werden beispielsweise noch weitere Additive zugegeben, bei denen es sich um phosphorhaltige Verbindungen (P-Verbindungen) handelt, wie sie dem Fachmann bekannt sind. Die einzelne P-Verbindung wird beispielsweise in einer Menge von 20 bis 200 ppm, bevorzugt von 20 bis 50 ppm, bezogen auf die Menge an DMT zugegeben und mit den übrigen Komponenten der Reaktion vermischt.

Ferner wird eine Ti-Verbindung als Polykondensationskatalysator hinzugefügt. Die Polykondensationskatalysatoren werden beispielsweise in einer Menge von 1 bis 100 ppm, bevorzugt 5 bis 50 ppm hinzugegeben. Die Mengen der Katalysatoren beziehen sich jeweils auf die Menge an DMT.

Anschließend wird in einem Temperaturbereich von etwa 200 °C bis 300 °C, bevorzugt von 250 °C bis 295 °C unter vermindertem Druck die Polykondensation durchgeführt. Nach Erreichen der gewünschten Viskosität wird der entstandene Polyester bei Temperaturen von 270 °C bis 300 C extrudiert und granuliert. Anschließend wird der entstandene Polyester getrocknet und kann dann weiterverarbeitet werden.

Im Einzelnen erfolgt die Herstellung von Polyethylenterephthalat im Laborautoklav diskontinuierlich in den beiden Teilschritten:
a) Umesterung von Dimethylterephthalat mit Monoethylenglykol zu Diglykolterephthalat und
b) Polykondensation im Autoklaven

Hierzu werden jeweils eine Umesterung in einer Glasapparatur und eine Polykondensation im Autoklaven etwa zeitgleich gefahren. Nach beendeter Polykondensation wird der Autoklav mit Monoethylenglykol gereinigt. Das Umesterungsprodukt wird im Autoklaven polykondensiert. Die Einsatzmengen, Fahrweise und sonstigen Bedingungen werden nachstehend beschrieben. Die Vakuumerzeugung im Autoklaven erfolgt über eine Drehschieber-Vakuumpumpe. Dabei wird das Vakuum von Hand in bestimmten Zeitintervallen geregelt.

Die Umesterung besteht in der Umsetzung von Dimethylterephthalat (DMT) mit Monoethylenglykol (MEG) in der Schmelze unter Einsatz eines Umesterungskatalysators. Dabei findet eine Umsetzung zu Diglykolterephthalat (DGT) unter Abspaltung von Methanol statt. Die Umesterungsreaktion wird bei einer Temperatur von 150 °C gestartet und ist bei 220 °C abgeschlossen, wobei sich die angegebenen Temperaturen auf die Innenraumtemperaturund nicht auf die Heizung der Apparatur beziehen.

Das DMT wird in geschuppter Form angeliefert, technisch eingewogen und über einen Pulvertrichter in die Umesterungsapparatur von Hand eingefüllt. Anschließend werden Monoethylenglykol und Mangan(II)-acetat-4-hydrat als Umesterungskatalysator zugesetzt. Zur Inertisierung werden die Umesterungsprodukte mit Stickstoff überlagert. Nach dem Aufschmelzen des DMT's und einsetzender Reaktion wird das gebildete Methanol bzw. Wasser über eine Kolonne und einen Kühler in einem Gefäß aufgefangen. Das anfallende Methanol bzw. Wasser und überschüssiges MEG werden als Lösungsmittelabfall einer, Verbrennungsanlage zugeführt.

Nach beendeter Umesterung werden ein Stabilisator (hier: gemischter Ester aus Phosphorsäure mit Methanol, Ethanol und Monoethylenglykol, PHM-Ester), ein Polykondensationskatalysator und eine Rußdispersion in Glykol zugesetzt. Das Umesterungs- bzw. Veresterungsprodukt wird aufgeschmolzen und über eine beheizte Produktleitung von der Umesterungsapparatur einem Autoklaven zugeführt.

Geeignete Titanverbindungen, die als Polykondensationskatalysatoren zum Einsatz kommen, sind Titankaliumoxalat (Kaliumoxodioxalat-o-Titanat) gemäß der chemischen Formel K₂TiO(ox)₂ x 2 H₂O und ein Copräzipitat, das sich aus TiO₂ : SiO₂ zusammensetzt. Bei diesem Copräzipitat handelt es sich um ein Oxid-Netzwerk in Gestalt eines schwer löslichen weißen Pulvers mit einer Korngröße kleiner 10 µm, das in Glykol schwer löslich, jedoch leicht dispergierbar ist. Der Titangehalt beträgt mehr als 1 Gew.-% Titan, bezogen auf das Gewicht des Copräzipitats . Bei dem eingesetzten Stabilsator handelt es sich um einen Phosphorsäureester mit kurzkettigen Alkyl- und Oligoglykolgruppen (PHM-Ester).

Das Umesterungs- bzw. Veresterungsprodukt wird nach Zusatz des Polykondensationskatalysators im Autoklaven polykondensiert. Dazu wird der Druck auf einen Unterdruck von 0,2 bis 0,5 mbar, insbesondere 0,3 mbar abgesenkt und die Innenraumtemperatur mittels einem Temperaturprogramm von 180 auf 280 °C erhöht. Die Reaktion wird unter Abspaltung von MEG solange fortgeführt, bis die gewünschte Schmelzviskosität erreicht ist. Diese Schmelzviskosität wird über das Drehmoment des Rührers im Autoklaven korreliert.

Die Kondensation erfolgt in einem Edelstahlkessel, der mit Diphenyl beheizt wird. Die Polymerschmelze wird unter Überlagerung mit Stickstoff nach Beendigung der Reaktion über einen Bodenauslauf abgelassen und nach Abkühlung im Wasserbad einem Granulator als Strang zugeführt.

Das Reaktionsglykol wird in einem gekühlten Behälter aufgefangen und anschließend entsorgt.

Die Unterdruckerzeugung im Autoklaven erfolgt über eine Drehschieber-Vakuumpumpe. Dabei wird der Unterdruck von Hand in bestimmten Zeitintervallen geregelt.

### PTA-Fahrweise

Der erfindungsgemäße Polyester kann beispielsweise in einem geschlossenen inertisierten Reaktionsgefäß hergestellt werden. Dazu wird die gereinigte Terephthalsäure (PTA) in dem niederen aliphatischen Glykol dispergiert und mit dem Polykondensationskatalysator gemischt.

Die Polykondensationskatalysatoren werden beispielsweise in einer Menge von 1 bis 100 ppm, bevorzugt 5 bis 50 ppm hinzugegeben. Die Mengen der Katalysatoren beziehen sich jeweils auf die Menge an PET.

Die Veresterung wird unter Druck in einem Temperaturbereich von 200 °C bis 290 °C, bevorzugt von etwa 220 °C bis 290 °C durchgeführt. Das Verhältnis von PTA zu Ethylenglykol beträgt von 1:1.0 bis 1:2.0 bevorzugt 1:1.05 bis 1:1.8.

Nach beendeter Veresterung wird anschließend die Rußdispersion zugegeben. Die Ruß-Dispergierung erfolgt in einem niederen aliphatischen Diol, wobei die Ruß-Konzentration zwischen 0,1 bis 50 Gew-%, bevorzugt zwischen 5 und 15 Gew-% liegt.

Es werden beispielsweise noch weitere Additive zugegeben, bei denen es sich um phosphorhaltige Verbindungen (P-Verbindungen) handelt, wie sie dem Fachmann bekannt sind. Die einzelne P-Verbindung wird beispielsweise in einer Menge von 0 bis 100 ppm, bevorzugt von 2 bis 20 ppm, bezogen auf die Menge an PET zugegeben und mit den übrigen Komponenten der Reaktion vermischt.

Anschließend wird in einem Temperaturbereich von etwa 200 °C bis 300 °C, bevorzugt von 250 °C bis 295 °C unter vermindertem Druck diePolykondensation durchgeführt. Nach Erreichen der gewünschten Viskosität wird der entstandene Polyester bei Temperaturen von 270 °C bis 300 °C extrudiert und granuliert. Anschließend wird der entstandene Polyester getrocknet und kann dann weiterverarbeitet werden.

### Rußdispersion

Für die Herstellung der Rußdispersion wird Gasruß mit einem pH-Wert kleiner 7 oder FurnaceRuß (Flammruß) mit einem pH-Wert größer 7 verwendet. Die Rußdispergierung erfolgt in einem niederen aliphatischen Diol unter Zumischung eines Dispergierhilfsmittels. Der für die Rußdispersion verwendete Ruß hat ein primäres Rußkorn mit einer mittleren Primärpartikelgröße kleiner 100 nm, insbesondere von 13 bis 50 nm. Bei dem niederen aliphatischen Diol handelt es sich zweckmäßigerweise um Ethylenglykol. Der Rußgehalt der Dispersion beträgt 0,1 bis 50 Gew.-%, bezogen auf das Gewicht der Dispersion. Insbesondere beträgt der Rußgehalt der Dispersion 5 bis 15 Gew.-%, bezogen auf das Gewicht der Dispersion. Rund 95 % der agglomerierten Rußpartikel im Polyester besitzen eine Durchmessergröße von größer 2 µm bis kleiner 10 µm.

Der Polyester enthält 0,01 bis 20 Gew.-% Ruß, bezogen auf das Gewicht des Polyesters, insbesondere enthält er 0,1 bis 2 Gew. -% Ruß. In bevorzugter Weise enthält der Polyester 0,4 bis 1,6 Gew.-% Ruß, bezogen auf das Gewicht des Polyesters.

Das Dispergierhilfsmittel aus der Gruppe Polyacrylat, modifiziertes Polyacrylat, Naphthalinsulfonsäure-Formaldehyd-Harz, Poly(vinylpyrrolidon-co-3-Methyl-1-vinylimidazolium-methylsulfat) ist ionisch. Es können auch nichtionische Dispergierhilfsmittel eingesetzt werden, die beispielsweise aus der Gruppe Polyvinylpyrrolidon, Poly(vinylpyrrolidon-co-vinylacetat), Polyvinylcaprolactam, Poly(vinylpyrrolidon-co-vinylcaprolactam), ethoxylierter Novolak, Tristyrylphenol-Ethoxylat, Tri-sec-butylphenol-Ethoxylat auswählbar sind.

Die DBP-Absorption nach ASTMD 2414 und DIN 53 601 dient bei den unpolaren Fumacerußen (vergleichbare spezifische Oberflächen vorausgesetzt) als Maß für deren Struktur. Sie liefert gleichzeitig ein anderes Maß für den Bindemittelbedarf: den "Netzpunkt" des Rußes. Bei seiner Bestimmung mit Hilfe eines Brabender-Plastographen wird ermittelt, wieviel Dibutylphthalat (DBP) in ml / 100 g Ruß zugegeben werden kann, bis der in einem Schaufelkneter befindliche Ruß nicht mehr locker beweglich ist, sondern durch nicht mehr aufgesogenes DBP stockig zu werden beginnt. Diese Kenngröße erlaubt Voraussagen auf das rheologische Verhalten in flüssigen Systemen, einschließlich hochviskoser Polymerschmelzen.

Bei den Polyestern nach der Erfindung beträgt das DBP-Absorptionsverhältnis der eingesetzten Rußtype mehr als 50 und die Obergrenze liegt bei kleiner 150. Bevorzugt liegt die DBP-Absorption im Bereich von größer 90 bis kleiner 130.

In einem speziellen Beispiel besteht die Rußdispersion zu 8 bis 12 Gew.-% aus Gasruß mit einem mittleren Primärteilchengröße von 25 nm, 1 bis 2 Gew.-% Dispergiermittel und 86 bis 91 Gew.-% Monoethylenglykol, wobei die Gewichtsprozente jeweils auf das Gesamtgewicht der Rußdispersion bezogen sind.

Im Labormaßstab wurden beispielsweise 30 g Gasruß, 3 g Dispergierhilfsmittel und 267 g Monoethylenglykol in einem Gefäß gemischt und mit einem Rührer des Typs UltraTurraxT50 (Lieferant Fa. IKA Labortechnik) der Gasruß bei einer Umdrehungszahl bis zu 24000 U/min in das Monoethylenglykol dispergiert. Das Gefäß wurde während des Dispergiervorgangs in einem Wasserbad gekühlt.

Der Gasruß liegt in Pulverform vor und hat einen pH-Wert von 4,5. Der Siebrückstand ist kleiner als 300 ppm und der Veraschungsrückstand beträgt 0,02 Gew.-%. Als Dispergierhilfsmittel kommt ein Natriumsalz des Naphthalinsulfonsäure-Formaldehyd-Polykondensats in Frage. Der als Stabilisator eingesetzte PHM-Ester ist eine Phosphorverbindung, die den Umesterungskatalysator Mangan(II)-acetat-4-hydrat deaktiviert. Dieser Phosphorsäureester weist die nachstehende Formel auf: 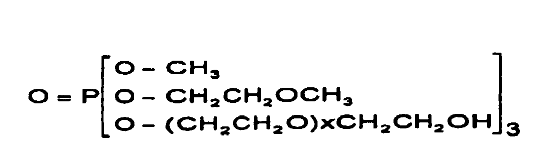 x= 0, 1, 2

In einem weiteren Beispiel wird eine Rußdispersion von 300 g aus 30 g Furnaceruß, 3 g ethoxyliertem Novolak, 3 ppm Entschäumer und 267 g MEG hergestellt, wobei in der gleichen Weise wie beim voranstehend beschriebenen Beispiel mit Gasruß die Komponenten miteinander verrührt und dispergiert werden. Der Polyester aus 2000 g DMT, 1200 ml MEG, 326 ppm Mn(ac)₂ x 4 H₂O, 27 ppm P als PHM-Ester und 15 ppm Ti (aus 111 ppm K₂TiO(ox)₂) enthält dann mit dieser Rußdispersion 1,5 Gew.-% Ruß, bezogen auf den Polyester.

### Beispiele

In der nachstehenden Tabelle 1 sind die Rußpartikelgrößen eines Vergleichsbeispiels 1 sowie der erfindungsgemäßen Beispiele 2 bis 5 aufgelistet. Aus der Tabelle 1 ist ersichtlich, dass die Anzahl der Rußpartikel mit einem Durchmesser größer als 10 µm bei Einsatz eines Antimon-trioxid-Katalysators im Standard-PET etwa doppelt so groß wie beim Einsatz eines Titankatalysators für die Polykondensation ist. Der Anteil des Titan im Polyester ist in ppm angegeben.

Die Verteilung der Rußpartikel wurde mit einem AccuSIZER Gerät Modell 770 der Fa. Particle Sizing Systems Inc., Kalifornien, USA) in einer Flüssigkeitsprobe von 20 ml in 128 Kanälen mit einem Schwellwert von 2,03 µm gemessen. In Tabelle 1 sind die relative Partikelgrößenverteilung für die prozentualen Anteile 5 %, 90 % und 95 % der Gesamtanzahl Rußpartikel, die Teilchendurchmesser sowie die Anzahl der Partikel mit einem Durchmesser größer 10 µm für die angeführten Beispiele zusammengestellt.

**Tabelle 1**

| Beispiel Nr. | Proben-Nr. | PK-Katalysator/Dispergierhilfsmittel | Relative Partikelgrößenverteilung | | | Partikelgröße > 10 µm pro g Probe · 10³ |
|---|---|---|---|---|---|---|
| | | | 5 % (µm) | 90 % (µm) | 95 % (µm) | |
| Vbsp. 1 | La 221 | Standardpolyester mit 1,5 % Ruß | 2,09 | 5,83 | 8,05 | 611 |
| Bsp. 2 | LA 216 | 10 Ti / Harz | 2,09 | 6,15 | 8,5 | 191 |
| Bsp. 3 | LA 227 | 10 Ti / PVP | 2,09 | 7,06 | 9,72 | 277 |
| Bsp. 4 | LA 242 | 15 Ti / PVP | 2,07 | 3,4 | 4,69 | 343 |
| Bsp. 5 | LA 243 | 20 Ti / PVP | 2,08 | 3,05 | 3,4 | 307 |

Das Vergleichsbeispiel 1 stellt einen Standardpolyester mit 1,5 % Ruß und mit Antimontrioxid Sb₂O₃ als Polykondensationskatalysator dar.

Im Labormaßstab wurden die erfindungsgemäßen Beispiele 2 bis 5, 9 und 6 mit K₂TiO(ox)₂ x 2 H₂O bzw. dem Copräzipitat TiO₂ : SiO₂ = 9 : 1 als Polykondensationskatalysator durchgeführt, die nachstehend in Tabelle 2 aufgelistet sind. Der Rußanteil für die Beispiele Nr. 1 bis 6 und 9 betrug jeweils 1,5 Gew.-% im Polyester. Die Beispiele Nr. 7 und 8 wurden mit Antimontrioxid und K₂TiO(ox)₂ x 2 H₂O als Polykondensationskatalysator ausgeführt, bei einem Rußgehalt von 0,45 Gew.-% im Polyester. In Tabelle 2 sind die Polykondensations(PK)-katalysatoren, die PK- und Umesterungs(UE)-Zeiten, die intrinsische Viskosität (IV) und die Farbzahlen L* und b* angegeben. Die IV wird in Dichloressigsäure bei 25 °C gemessen.

Zu den Beispielen der Tabelle 2 sind nachstehend die Rezepturen bezüglich der Komponenten des Polyester, einschließlich der jeweiligen Rußdispersion und die Fahrdaten angeführt, die neben den PK- und UE-Zeiten die Drehmomentzunahme des Rührers am Ende der Polykondensation und die Chip-Ausbeute umfassen

**Tabelle 2**

| Nr. | Rußmenge (Gew.-%) | Mn (ppm) | P (ppm) | Sb (ppm) | IV (dl/g) | L* | b* |
|---|---|---|---|---|---|---|---|
| 1 Standard-PET | 1,5 | 73 | 26 | 408 | 0,623 | 23,3 | -0,4 |
| | | | | | | | |

| Nr. | Rußmenge (Gew.-%) | PK-Katalysator | UE-Zeit (min) | PK-Zeit (min) | IV (dl/g) | L* | b* |
|---|---|---|---|---|---|---|---|
| 2 | 1,5 | K₂TiO(ox)₂ | 225 | 106 | 0,644 | 23,6 | -0,3 |
| 3 | 1,5 | K₂TiO(ox)₂ | 210 | 152 | 0,655 | 23 | -0,4 |
| 4 | 1,5 | K₂TiO(ox)₂ | 190 | 102 | 0,646 | 23,9 | -0,4 |
| 5 | 1,5 | K₂TiO(ox)₂ | 180 | 92 | 0,631 | 24,1 | -0,6 |
| 6 | 1,5 | TiO₂/SiO₂ | 205 | 105 | 0,637 | 23,6 | -0,5 |
| 7 | 0,45 | Sb₂O₃ | 203 | 126 | 0,592 | 22,2 | 4 |
| 8 | 0,45 | K₂TiO(ox)₂ | 190 | 82 | 0,607 | 22,9 | 4 |
| 9 | 1,5 | K₂TiO(ox)₂ | 196 | 109 | 0,661 | 24,4 | -0,4 |

### Vergleichsbeispiel 1: Standard-Polyester

Es handelt sich um einen Standard-Polyester mit 1,5 Gew.-% Naphthalinsulfonsäure-Formaldehyd-Polykondensat als Dispergierhilfsmittel, Antimontrioxid als Polykondensationskatalysator, einem Mn-Katalysator als Umesterungskatalysator und einem PHM-Ester als Phosphorverbindung.

### Beispiel 2: LA216 K₂TiO(ox)₂ x 2 H₂O

2.1 Rezeptur:
   2000 g DMT,
   1200 ml Monoethylenglykol (MEG)
   326 ppm Mn(ac)₂ x 4 H₂O
   27 ppm P als PHM-Ester
   10 ppm Ti

   1.5 % Rußdispersion
   300 g Rußdispersion bestehend aus:
   30 g Ruß und 3 g Naphthalinsulfonsäure-Formaldehyd-Polykondensat und 267 g MEG
2.2 Fahrdaten:
   Umesterungszeit: 225 min; Methanol / Glykol Menge: 890 ml
   Polykondensationszeit: 106 min; Drehmomentzunahme 11.0 Nm;
   Chip-Ausbeute: 1588 g

### Beispiel 3: LA227 K₂TiO(ox)₂ x 2 H₂O / PVP

3.1 Rezeptur:
   2000 g DMT,
   1200 ml Monoethylenglykol (MEG)
   326 ppm Mn(ac)₂ x 4 H₂O

   27 ppm P als PHM-Ester
   10 ppm Ti = 74 ppm K₂TiO(ox)₂ x 2 H₂O

   1.5 % Rußdispersion
   300 g Rußdispersion bestehend aus:
   30 g Ruß und 3 g PVP und 267 g MEG
3.2 Fahrdaten:
   Umesterungszeit: 210 min; Methanol / Glykol Menge: 875 ml
   Polykondensationszeit: 152 min; Drehmomentzunahme 11.0 Nm;
   Chip-Ausbeute: 1537 g

### Beispiel 4: LA242 K₂TiO(ox)₂ x 2 H₂O / PVP

4.1 Rezeptur:
   2000 g DMT,
   1200 ml Monoethylenglykol (MEG)
   326 ppm Mn(ac)₂ x 4 H₂O

   27 ppm P als PHM-Ester
   15 ppm Ti = 111 ppm K₂TiO(ox)₂ x 2 H₂O

   1.5 % Rußdispersion
   300 g Rußdispersion bestehend aus:
   30 g Ruß und 3 g PVP und 267 g MEG
4.2 Fahrdaten:
   Umesterungszeit: 190 min; Methanol / Glykol Menge: 870 ml
   Polykondensationszeit: 102 min; Drehmomentzunahme 11.0 Nm;
   Chip-Ausbeute: 1572 g

### Beispiel 5: LA243 K₂TiO(ox)₂ x 2 H₂O / PVP

5.1 Rezeptur:
   2000 g DMT,
   1200 ml Monoethylenglykol (MEG)
   326 ppm Mn(ac)₂ x 4 H₂O

   27 ppm P als PHM-Ester
   20 ppm Ti = 148 ppm K₂TiO(ox)₂ x 2 H₂O

   1.5 % Rußdispersion
   300 g Rußdispersion bestehend aus:
   30 g Ruß und 3 g PVP und 267 g MEG
5.2 Fahrdaten:
   Umesterungszeit: 180 min; Methanol / Glykol Menge: 890 ml
   Polykondensationszeit: 92 min; Drehmomentzunahme 11.0 Nm;
   Chip-Ausbeute: 1501 g

### Beispiel 6: LA217 C94

6.1 Rezeptur:
   2000 g DMT,
   1200 ml Monoethylenglykol (MEG)
   326 ppm Mn(ac)₂ x 4 H₂O

   27 ppm P als PHM-Ester
   10 ppm Ti = 18.5 ppm C94

   1.5 % Rußdispersion
   300 g Rußdispersion bestehend aus:
   30 g Ruß und 3 g Naphthalinsulfonsäure-Formaldehyd-Polykondensat und 267 g MEG
6.2 Fahrdaten:
   Umesterungszeit: 205 min; Methanol / Glykol Menge: 865 ml
   Polykondensationszeit: 105 min; Drehmomentzunahme 11.0 Nm;
   Chip-Ausbeute: 1665 g

### Beispiele mit 0.45 % Ruß im Polyester

### Beispiel 7: LA268 (Referenz)

7.1 Rezeptur:
   2000 g DMT,
   1200 ml Monoethylenglykol (MEG)
   326 ppm Mn(ac)₂ x 4 H₂O

   27 ppm P als PHM-Ester
   601 ppm Sb₂O₃

   0.45 % Rußdispersion
   90 g Rußdispersion bestehend aus:
   9 g Ruß und 0.9 g PVP und 80.1 g MEG
7.2 Fahrdaten:
   Umesterungszeit: 203 min; Methanol / Glykol Menge: 870 ml
   Polykondensationszeit: 126 min; Drehmomentzunahme 7.0 Nm;
   Chip-Ausbeute: 1656 g

### Beispiel 8: LA269

8.1 Rezeptur:
   2000 g DMT,
   1200 ml Monoethylenglykol (MEG)
   326 ppm Mn(ac)₂ x 4 H₂O

   27 ppm P als PHM-Ester
   15 ppm Ti = 148 ppm K₂TiO(ox)₂ x 2 H₂O

   0.45 % Rußdispersion
   90 g Rußdispersion bestehend aus:
   9 g Ruß und 0.9 g Naphthalinsulfonsäure-Formaldehyd-Polykondensat und 80.1 g MEG
8.2 Fahrdaten:
   Umesterungszeit: 190 min; Methanol / Glykol Menge: 880 ml
   Polykondensationszeit: 82 min; Drehmomentzunahme 7.0 Nm;
   Chip-Ausbeute: 1662 g

### Beispiel 9: LA 257 K₂TiO(ox)₂ Furnaceruß + Novolak

9.1 Rezeptur:
   2000 g DMT, ,
   1200 ml Monoethylglykol (MEG)
   326 ppm Mn(ac)₂ x 4 H₂O

   27 ppm P als PHM-Ester
   15 ppm Ti = 111 ppm K₂TiO(ox)₂

   1.5 % Rußdispersion
   300 g Rußdispersion bestehend aus
   30 g Furnaceruß und 3 g ethoxylierter Novolak, 3 ppm Entschäumer und 267 g MEG
9.2 Fahrdaten:
   Umesterungszeit: 196 min; Methanol / Glykol Menge: 860 ml
   Polykondensationszeit: 109 min; Drehmomentzunahme 11.0 Nm;
   Chip-Ausbeute: 1271 g

Bei dem Ruß des Vergleichsbeispiels 1und der Beispiele 2 bis 8 handelt es sich um Gasruß, jedoch kann ebenso Furnaceruß, wie in Beispiel 9, verwendet werden Es muss dann nur das geeignete Dispergierhilfsmittel für den Furnaceruß genommen werden.

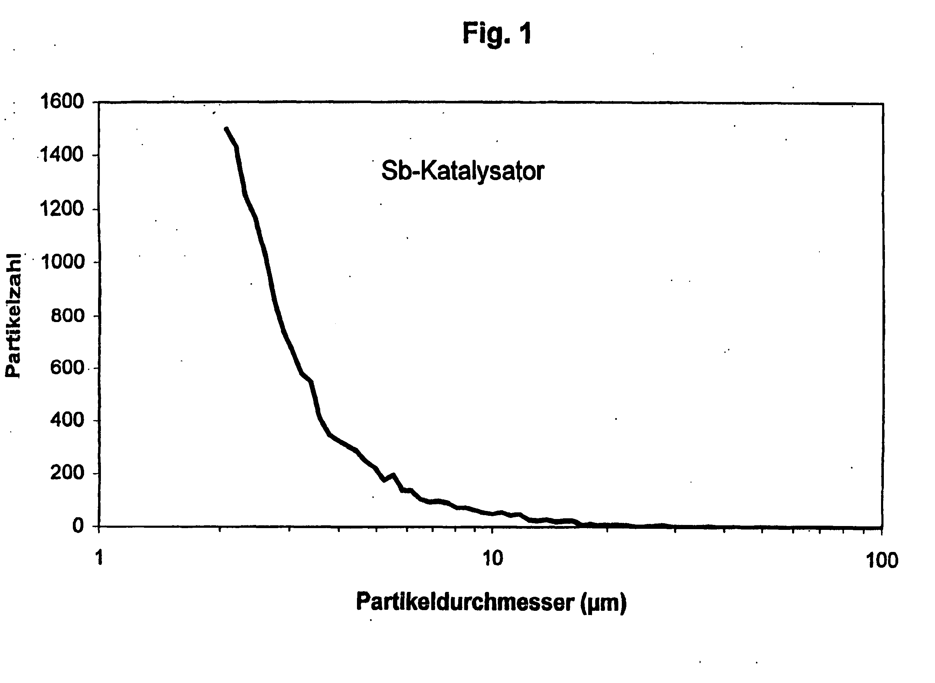

Die Verteilung der Rußpartikel in Abhängigkeitvon den Teilchendurchmessern ist in den Figuren 1 bis 3 dargestellt. Dabei zeigen

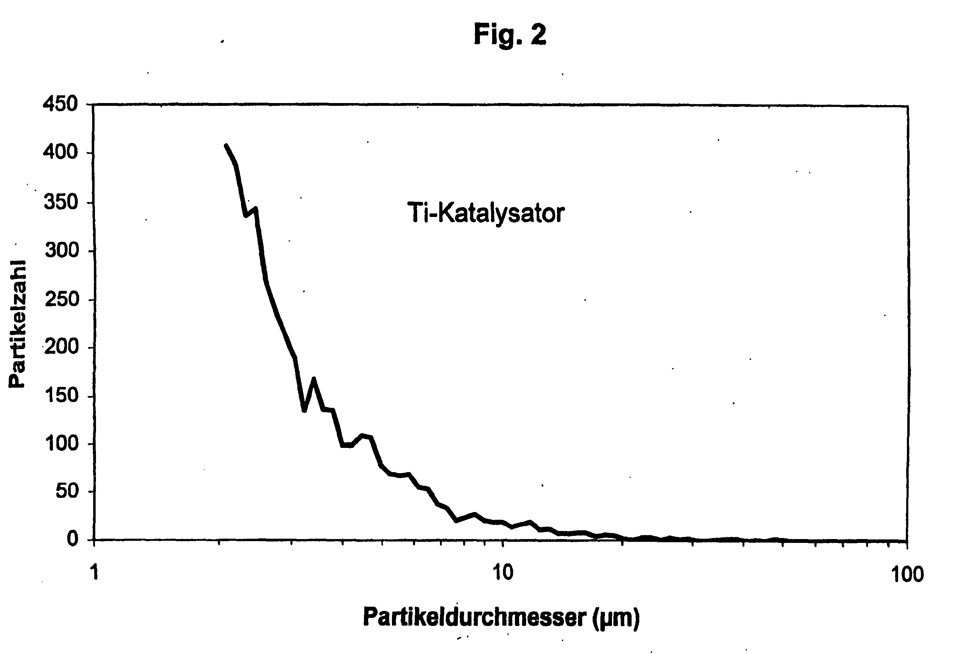

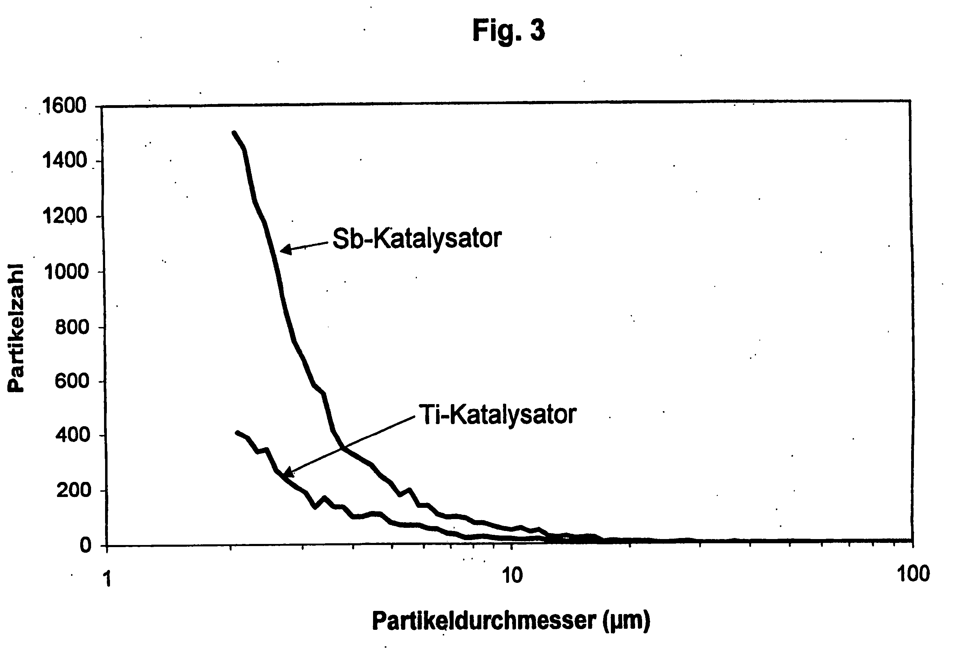

Figur 1 zeigt die Verteilung gemäß Vergleichsbeispiel 1, Figur 2 gemäß dem erfindungsgemäßen Beispiel 3 und Figur 3 den Vergleich der beiden Verteilungen aus den Figuren 1 und 2.

Aus Figur 3 ist ersichtlich, dass bei Einsatz einer Titanverbindung als Polykondensationskatalysator die Anzahl der Rußpartikel mit einem Durchmesser größer 10 µm wesentlich kleiner als bei Einsatz einer Antimonverbindung ist.

Der erfindungsgemäße Polyester findet Verwendung bei der Herstellung von Fasern, Nonwoven-Materialien und Folien, wie nachstehend näher spezifiziert wird.

| | |
|---|---|
| Faser-Anwendungen: Textile Filamente | z. B.: Supennikro Filamente (< 0.5 dtex), Mikro F. (0.5 - 1.0 dtex), Fein-F. (1.0 - 2.5 dtex), mittlere F. (2.5 - 7.0 dtex), grobe F. (> 7 dtex) |
| Technische Filamente: | z.B. für Sicherheitsgurte, Netze, |
| Stapelfasern: | z.B. Baumwolltyp (1.3 - 2.8 dtex), Wolltyp (3.3 - 10 dtex), für Gardinen (10 - 300 dtex) |
| BCF Fasern (bulk continuous filament fibers) Monofilamente Nonwoven: | Verwendung zur Herstellung von Faser-Vlies Strukturen |
| Folien-Anwendungen: | Farbtiefe Einfärbung von Folien Folien mit UV-Schutz Abtönung in Folien |

Herstellung von Masterbatches als Zugabe zu Polymerkomponenten

Herstellung von geformten Gegenständen, wie z. B. Spritzgußteilen

## Patentansprüche

1. Thermostabiler, antimonfreier Polyester auf Basis aromatischer Dicarbonsäuren und aliphatischer Diole, wobei ein Teil der aromatischen Dicarbonsäuren durch aliphatische Dicarbonsäuren ersetzt sein kann und der Polyester Titan enthält, **dadurch gekennzeichnet, dass** er 1 bis 100 ppm Titan, bezogen auf die Menge an Polyester, 0,01 bis 20 Gew.-% Ruß, bezogen auf das Gewicht des Polyesters und 0 bis 200 ppm einer phosphorigen Verbindung, bezogen auf die Menge an Polyester, enthält.

2. Polyester nach Anspruch 1, **dadurch gekennzeichnet, dass** er 0,01 bis 5 Gew.-% Ruß, bezogen auf das Gewicht des Polyesters, enthält.

3. Polyester nach Anspruch 1, **dadurch gekennzeichnet, dass** er 0,1 bis 2 Gew.-% Ruß, bezogen auf das Gewicht des Polyesters, enthält.

4. Polyester nach Anspruch 3, **dadurch gekennzeichnet, dass** er 0,4 bis 1,6 Gew.-% Ruß, bezogen auf das Gewicht des Polyesters, enthält.

5. Polyester nach Anspruch 1, **dadurch gekennzeichnet, dass** der Polykondensationskatalysator aus der Gruppe löslicher oder dispergierbarer Titanverbindungen auswählbar ist.

6. Polyester nach Anspruch 5, **dadurch gekennzeichnet, dass** der Polykondensationskatalysator aus einer in Ethylenglykol löslichen Titanverbindung besteht.

7. Polyester nach Anspruch 6, **dadurch gekennzeichnet, dass** die Titanverbindung ein Titanalkoxid Ti(OR)₄ oder Titankaliumoxalat K₂TiO(ox)₂ ist.

8. Polyester nach Anspruch 5, **dadurch gekennzeichnet, dass** der Polykondensationskatalysator aus einem in Ethylenglykol dispergierbarem Gemisch aus Titandioxid und Siliziumdioxid oder Metalloxid-Titandioxid-Hydrat besteht.

9. Polyester nach Anspruch 8, **dadurch gekennzeichnet, dass** der Polykondensationskatalysator ein Copräzipitat aus TiO₂ : SiO₂ ist.

10. Polyester nach Anspruch 1, **dadurch gekennzeichnet, dass** der Anteil an metallischem Titan 5 bis 50 ppm, bezogen auf die Menge des Polyesters, beträgt.

11. Polyester nach Anspruch 1, **dadurch gekennzeichnet, dass** der Ruß in Form einer Rußdispersion nach der Veresterung zugegeben ist und dass die Ruß-Dispergierung in einem niederen aliphatischen Diol erfolgt, unter Zumischung eines Dispergierhilfsmittels.

12. Polyester nach Anspruch 11, **dadurch gekennzeichnet, dass** die Rußdispersion aus einem primären Rußkorn mit einer mittleren Primärpartikelgröße von kleiner 100 nm, insbesondere von 13 bis 50 nm, einem Dispergierhilfsmittel und Ethylenglykol besteht.

13. Polyester nach Anspruch 11, **dadurch gekennzeichnet, dass** das Dispergierhilfsmittel ionisch ist und aus der Gruppe Polyacrylat, modifiziertes Polyacrylat, Naphthalinsulfonsäure-Formaldehyd-Harz, Poly(vinylpyrrolidon-co-3-Methyl-1-vinylimidazolium-methylsulfat) ausgewählt ist.

14. Polyester nach Anspruch 11, **dadurch gekennzeichnet, dass** das Dispergierhilfsmittel nichtionisch ist und aus der Gruppe Polyvinylpyrrolidon, Poly(vinylpyrrolidon-co-vinylacetat), Polyvinylcaprolactam, Poly(vinylpyrrolidon-co-vinylcaprolactam), ethoxylierter Novolak, Tristyrylphenol-Ethoxylat, Tri-sec-butylphenol-Ethoxylat ausgewählt ist.

15. Polyester nach Anspruch 11, **dadurch gekennzeichnet, dass** der Ruß ein Gasruß mit einem pH-Wert kleiner 7 ist.

16. Polyester nach Anspruch 11, **dadurch gekennzeichnet, dass** der Ruß ein Furnaceruß (Flammruß) mit einem pH-Wert größer 7 ist.

17. Polyester nach Anspruch 15 oder 16, **dadurch gekennzeichnet, dass** die DBP-Absorption, gegeben durch das Verhältnis des Dibutylphthalat in ml zu 100 g Rußpulver, im Bereich von größer 50 bis kleiner 150 liegt.

18. Polyester nach Anspruch 17, **dadurch gekennzeichnet, dass** die DBP-Absorption im Bereich von größer 90 bis kleiner 130 liegt.

19. Polyester nach Anspruch 11, **dadurch gekennzeichnet, dass** derAnteil des Dispergierhilfsmittels 1 bis 60 Gew.-%, bezogen auf den dispergierten Ruß, beträgt.

20. Polyester nach Anspruch 11, **dadurch gekennzeichnet, dass** der Rußgehalt der Dispersion 0,1 bis 50 Gew.-%, bezogen auf die Dispersion, beträgt.

21. Polyester nach Anspruch 20, **dadurch gekennzeichnet, dass** Rußgehalt der Dispersion 5 bis 15 Gew.-%, bezogen auf die Dispersion, beträgt.

22. Polyester nach Anspruch 1, **dadurch gekennzeichnet, dass** 95 % der Gesamtzahl der agglomerierten Rußpartikel im Polyester eine Durchmessergröße kleiner 10 µm aufweisen.

23. Verfahren zur Herstellung eines Polyesters auf der Basis aromatischer Dicarbonsäuren und aliphatischer Diole, wobei ein Teil der aromatischen Dicarbonsäuren durch aliphatische Dicarbonsäuren ersetzt sein kann, **dadurch gekennzeichnet, dass** nach erfolgter Umesterungreaktion von Dimethylterephthalat und Ethylenglykol bzw. Veresterung gereinigter Terephthalsäure, die in einem niederen aliphatischen Glykol dispergiert ist und Polykondensation dieser Komponenten mit Hilfe einer Ti-Verbindung als Polykondensationskatalysator, eine Rußdispersion zugemischt wird, die in einem niederen aliphatischen Diol zusammen mit einem Dispergierhilfsmittel dispergiert ist, und dass phosphorhaltige Verbindungen als Additive mit den übrigen Komponenten der Reaktion vermischt werden.

24. Verfahren nach Anspruch 23, **dadurch gekennzeichnet, dass** die Polykondensation bei einer Temperatur von 200 bis 300 °C und einem Unterdruck von 0,2 bis 0,5 mbar bis zum Erreichen einer gewünschten IV von 0,4 bis 0,9 dl/g, gemessen in Dichloressigsäure bei 25 °C, durchgeführt wird.

25. Verfahren nach Anspruch 23, **dadurch gekennzeichnet, dass** für die Rußdispersion 0,1 bis 50 Gew.-% Gas- oder Furnaceruß, bezogen auf das Gesamtgewicht der Rußdispesion als Primärkorn mit einer mittleren Partikelgröße von 13 bis 50 nm und 1 bis 60 Gew.-% Dispergiermittel, bezogen auf den Ruß in Ethylenglykol, dispergiert werden.

26. Verwendung des Polyesters nach den Ansprüchen 1 bis 22 für textile Filamente, technische Filamente für Sicherheitsgurte, Netze, Stapelfasern, BCF-Fasern, Monofilamente.

27. Verwendung des Polyesters nach den Ansprüchen 1 bis 22 für Faser-Vlies-Strukturen.

28. Verwendung des Polyesters nach den Ansprüchen 1 bis 22 zur farbintensiven Einfärbung von Folien, Abtönen von Folien, für Folien mit UV-Schutz.

29. Verwendung des Polyesters nach den Ansprüchen 1 bis 22 zur Herstellung von Masterbatches als Zusatz zu Polymerkomponenten.

30. Verwendung des Polyesters nach den Ansprüchen 1 bis 22 für spritzgegossene geformte Gegenstände.

## Claims

1. A thermally stable, antimony-free polyester based on aromatic dicarboxylic acids and on aliphatic diols, where a portion of the aromatic dicarboxylic acids may have been replaced by aliphatic dicarboxylic acids and the polyester comprises titanium, wherein the polyester comprises from 1 to 100 ppm of titanium, based on the amount of polyester, from 0.01 to 20 % by weight of carbon black, based on the weight of the polyester, and from 0 to 200 ppm of a phosphorous compound, based on the amount of polyester.

2. The polyester as claimed in claim 1, which comprises from 0.01 to 5 % by weight of carbon black, based on the weight of the polyester.

3. The polyester as claimed in claim 1, which comprises from 0.1 to 2 % by weight of carbon black, based on the weight of the polyester.

4. The polyester as claimed in claim 1, which comprises from 0.4 to 1.6 % by weight of carbon black, based on the weight of the polyester.

5. The polyester as claimed in claim 1, wherein the polycondensation catalyst may be selected from the group consisting of soluble or dispersible titanium compounds.

6. The polyester as claimed in claim 5, wherein the polycondensation catalyst is composed of an ethylene-glycol-soluble titanium compound.

7. The polyester as claimed in claim 6, wherein the titanium compound is a titanium alkoxide Ti(OR)₄ or titanium potassium oxalate K₂TiO(ox)₂.

8. The polyester as claimed in claim 5, wherein the polycondensation catalyst is composed of an ethylene-glycol-dispersible mixture made from titanium dioxide and silicon dioxide or metal oxide-titanium dioxide hydrate.

9. The polyester as claimed in claim 8, wherein the polycondensation catalyst is a coprecipitate of TiO₂:SiO₂.

10. The polyester as claimed in claim 1, wherein the proportion of metallic titanium is 5 to 50 ppm, based on the amount of the polyester.

11. The polyester as claimed in claim 1, wherein the carbon black is added in the form of a carbon black dispersion after the esterification, and wherein the dispersion of the carbon black takes place in a lower-aliphatic diol, with admixture of a dispersing agent.

12. The polyester as claimed in claim 11, wherein the carbon black dispersion is composed of primary carbon black particles with an average primary particle size below 100 nm, in particular from 13 to 50 nm, of a dispersing agent and ethylene glycol.

13. The polyester as claimed in claim 11, wherein the dispersing agent is ionic and has been selected from the group consisting of polyacrylate, modified polyacrylate, naphthalenesulfonic acid-formaldehyde resin, poly(vinylpyrrolidone-co-3-methyl-1-vinylimidazolium methyl sulfate).

14. The polyester as claimed in claim 11, wherein the dispersing agent is nonionic and has been selected from the group consisting of polyvinylpyrrolidone, poly(vinylpyrrolidone-co-vinyl acetate), polyvinylcaprolactam, poly(vinylpyrrolidone-co-vinylcaprolactam), ethoxylated novolak, tristearylphenol ethoxylate, tri-sec-butylphenyl ethoxylate.

15. The polyester as claimed in claim 11, wherein the carbon black is a gas black whose pH is below 7.

16. The polyester as claimed in claim 11, wherein the carbon black is a furnace black (flame black) whose pH is above 7.

17. The polyester as claimed in claim 15 or 16, wherein the DBP absorption, given by the ratio of dibutyl phthalate in ml to 100 g of carbon black powder, is in the range from above 50 to below 150.

18. The polyester as claimed in claim 17, wherein the DPB absorption is in the range from above 90 to below 130.

19. The polyester as claimed in claim 11, wherein the proportion of the dispersing agent is from 1 to 60 % by weight, based on the dispersed carbon black.

20. The polyester as claimed in claim 11, wherein the carbon black content of the dispersion is from 0.1 to 50 % by weight, based on the dispersion.

21. The polyester as claimed in claim 20, wherein the carbon black content of the dispersion is from 5 to 15% by weight, based on the dispersion.

22. The polyester as claimed in claim 1, wherein 95 % of the total number of agglomerated carbon black particles in the polyester have a diameter below 10 µm.

23. A process for preparing a polyester based on aromatic dicarboxylic acids and on aliphatic diols, where a portion of the aromatic dicarboxylic acids may have been replaced by aliphatic dicarboxylic acids, which comprises, after completing a transesterification reaction of dimethyl terephthalate and ethylene glycol or, respectively, an esterification of purified terephthalic acid which has been dispersed in a lower-aliphatic glycol, and polycondensation of these components with the aid of a Ti compound as polycondensation catalyst, admixing a carbon black dispersion which has been dispersed in a lower-aliphatic diol together with a dispersing agent, and mixing phosphorus-containing compounds as additives with the other components of the reaction.

24. The process as claimed in claim 23, wherein the polycondensation is carried out at a temperature of from 200 to 300°C and at a subatmospheric pressure of from 0.2 to 0.5 mbar, until a desired IV of from 0.4 to 0.9 dl/g, measured in dichloroacetic acid at 25°C, has been achieved.

25. The process as claimed in claim 23, wherein for the carbon black dispersion from 0.1 to 50 % by weight of gas black or furnace black, based on the total weight of the carbon black dispersion, in the form of primary particles with an average particle size of from 13 to 50 nm, and from 1 to 60 % by weight of dispersing agent, based on the carbon black, are dispersed in ethylene glycol.

26. The use of the polyester as claimed in any of claims 1 to 22 for textile filaments, technical filaments or safety belts, nets, staple fibers, BCF fibers, monofilaments.

27. The use of the polyester as claimed in any of claims 1 to 22 for fiber-nonwoven structures.

28. The use of the polyester as claimed in any of claims 1 to 22 for the high-strength coloring of films, shading of films, for films with UV protection.

29. The use of the polyester as claimed in any of claims 1 to 22 for producing masterbatches as an additive to polymer components.

30. The use of the polyester as claimed in any of claims 1 to 22 for injection-molded articles.

## Revendications

1. Polyester thermostable exempt d'antimoine, à base d'acides dicarboxyliques aromatiques et de diols aliphatiques, une partie des acides dicarboxyliques aromatiques pouvant être remplacés par des acides dicarboxyliques aliphatiques et le polyester contenant du titane, **caractérisé en ce qu'**il contient de 1 à 100 ppm de titane, par rapport à la quantité de polyester, de 0,01 à 20 % en poids de noir de carbone, par rapport au poids du polyester et de 0 à 200 ppm d'un composé phosphoreux, par rapport à la quantité de polyester.

2. Polyester selon la revendication 1, **caractérisé en ce qu'**il contient de 0,01 à 5 % en poids de noir de carbone, par rapport au poids du polyester.

3. Polyester selon la revendication 1, **caractérisé en ce qu'**il contient de 0,1 à 2 % en poids de noir de carbone, par rapport au poids du polyester.

4. Polyester selon la revendication 3, **caractérisé en ce qu'**il contient de 0,4 à 1,6 % en poids de noir de carbone, par rapport au poids du polyester.

5. Polyester selon la revendication 1, **caractérisé en ce que** le catalyseur de polycondensation peut être choisi dans le groupe des composés du titane solubles ou dispersables.

6. Polyester selon la revendication 5, **caractérisé en ce que** le catalyseur de polycondensation consiste en un composé contenant du titane soluble dans l'éthylèneglycol.

7. Polyester selon la revendication 6, **caractérisé en ce que** le composé contenant du titane est un alcoolate de titane Ti(OR)₄ ou l'oxalate de potassium et de titane K₂TiO(ox)₂.

8. Polyester selon la revendication 5, **caractérisé en ce que** le catalyseur de polycondensation consiste en un mélange dispersable dans l'éthylèneglycol de dioxyde de titane et de dioxyde de silicium ou d'un oxyde métallique-dioxyde de titane hydraté.

9. Polyester selon la revendication 8, **caractérisé en ce que** le catalyseur de polycondensation est un coprécipité de TiO₂:SiO₂.

10. Polyester selon la revendication 1, **caractérisé en ce que** la teneur en titane métallique est de 5 à 50 ppm, par rapport à la quantité du polyester.

11. Polyester selon la revendication 1, **caractérisé en ce que** le noir de carbone est ajouté après l'estérification, sous forme d'une dispersion de noir de carbone, et **en ce que** la dispersion de noir de carbone s'effectue dans un diol aliphatique inférieur, avec addition d'un adjuvant de dispersion.

12. Polyester selon la revendication 11, **caractérisé en ce que** la dispersion de noir de carbone est constituée d'un grain de noir de carbone primaire ayant une taille moyenne de particule primaire inférieure à 100 nm, en particulier de 13 à 50 nm, d'un adjuvant de dispersion et d'éthylèneglycol.

13. Polyester selon la revendication 11, **caractérisé en ce que** l'adjuvant de dispersion est ionique et est choisi dans le groupe constitué par le polyacrylate, un polyacrylate modifié, la résine acide naphtalènesulfonique-formaldéhyde, le poly(vinylpyrrolidone-co-méthylsulfate de 3-méthyl-1-vinylimidazolinium).

14. Polyester selon la revendication 11, **caractérisé en ce que** l'adjuvant de dispersion est non ionique et est choisi dans le groupe constitué par le polyvinylpyrrolidone, un poly(vinylpyrrolidone-co-acétate de vinyle), le polyvinylcaprolactame, un poly(vinylpyrrolidone-co-vinylcaprolactame), une Novolaque éthoxylée, un produit d'éthoxylation de tristyrylphénol, un produit d'éthoxylation de tri-sec-butylphénol.

15. Polyester selon la revendication 11, **caractérisé en ce que** le noir de carbone est un noir de fumée ayant un pH inférieur à 7.

16. Polyester selon la revendication 11, **caractérisé en ce que** le noir de carbone est un noir au four (noir de flamme) ayant un pH supérieur à 7.

17. Polyester selon la revendication 15 ou 16, **caractérisé en ce que** l'absorption de DBP, donnée par le rapport du phtalate de dibutyle en ml à 100 g de poudre de noir de carbone, se situe dans la plage allant de >50 à <150.

18. Polyester selon la revendication 17, **caractérisé en ce que** l'absorption de DBP se situe dans la plage allant de >90 à <130.

19. Polyester selon la revendication 11, **caractérisé en ce que** la proportion de l'adjuvant de dispersion va de 1 à 60 % en poids, par rapport au noir de carbone dispersé.

20. Polyester selon la revendication 11, **caractérisé en ce que** la teneur en noir de carbone de la dispersion va de 0,1 à 50 % en poids, par rapport à la dispersion.

21. Polyester selon la revendication 20, **caractérisé en ce que** la teneur en noir de carbone de la dispersion va de 5 à 15 % en poids, par rapport à la dispersion.

22. Polyester selon la revendication 1, **caractérisé en ce que** 95 % du nombre total des particules de noir de carbone agglomérées dans le polyester ont une taille en diamètre inférieure à 10 µm.

23. Procédé pour la préparation d'un polyester à base d'acides dicarboxyliques aromatiques et de diols aliphatiques, une partie des acides dicarboxyliques aromatiques pouvant être remplacés par des acides dicarboxyliques aliphatiques, **caractérisé en ce qu'**une fois effectuée la réaction de transestérification de téréphtalate de diméthyle et d'éthylèneglycol ou l'estérification d'acide téréphtalique purifié qui est dispersé dans un glycol aliphatique inférieur et polycondensation de ces composants à l'aide d'un composé contenant du titane en tant que catalyseur de polycondensation, on ajoute une dispersion de noir de carbone, qui est dispersée dans un diol aliphatique inférieur conjointement avec un adjuvant de dispersion, et **en ce qu'**on mélange des composés phosphorés, en tant qu'additifs, avec les autres composants de la réaction.

24. Procédé selon la revendication 23, **caractérisé en ce que** la polycondensation est effectuée à une température de 200 à 300 °C et sous un vide partiel de 0,2 à 0,5 mbar, jusqu'à l'obtention d'une viscosité IV de 0,4 à 0,9 dl/g, mesurée dans de l'acide dichloracétique à 25 °C.

25. Procédé selon la revendication 23, **caractérisé en ce que** pour la dispersion de noir de carbone on disperse de 0,1 à 50 % en poids de noir de fumée ou de noir au four, par exemple au poids total de la dispersion de noir de carbone en tant que grain primaire ayant une taille moyenne de particule de 13 à 50 nm et de 1 à 60 % en poids de dispersant, par rapport au noir de carbone dans l'éthylèneglycol.

26. Utilisation du polyester selon les revendications 1 à 22 pour des filaments textiles, des filaments industriels pour ceintures de sécurité, des filets, des fibres coupées, des fibres BCF (à filaments discontinus texturés), des monofilaments.

27. Utilisation du polyester selon les revendications 1 à 22, pour des structures de non-tissés de fibres.

28. Utilisation du polyester selon les revendications 1 à 22, pour la coloration intense de films, le nuançage de films, pour des films à protection anti-UV.

29. Utilisation du polyester selon les revendications 1 à 22, pour la fabrication de mélanges-maîtres en tant qu'additif à des composants de polymères.

30. Utilisation du polyester selon les revendications 1 à 22, pour des articles moulés par moulage par injection.
